# EUROPEAN PATENT APPLICATION

(11) **EP 4 759 591 A1**
(43) Date of publication of application: **17.06.2026**
(21) Application number: 25212184.3
(22) Date of filing: 29.10.2025
(51) Int. Cl.: B60K 5/12, B60K 1/00

(54) **FRONT STRUCTURE OF VEHICLE**

(30) Priority: 10.12.2024 JP 2024215249
(71) Applicant: Suzuki Motor Corporation, Shizuoka 432-8611 (JP)
(72) Inventor: KAMOSHIDA, Hiroyuki, HAMAMATSU-SHI, 432-8611 (JP)
(74) Representative: Plasseraud IP

(57) **Abstract**

Object

To provide a front structure of a vehicle by which a rearward movement of a drive device can be restricted with a simple structure at the time of a front collision of the vehicle.

Solution

A front structure of a vehicle 1 includes a rear mounting device 10 configured to elastically support a drive device 5 on a cross member 3. The rear mounting device 10 includes: a mounting portion 12 to be fixed to the cross member 3 and including, on an inner side in a radial direction, a cylindrical portion 12A that accommodates a mount bushing 11; and a mounting bracket 13 to be connected to the mount bushing 11 and the drive device 5. The mounting bracket 13 includes: a bushing-side bracket portion 13B extending from the mount bushing 11 (member-side connection portion 13A) toward the drive device 5; and a first bracket portion 13C and a second bracket portion 13D that extend from the bushing-side bracket portion 13B to an outer side in the radial direction of an outer end portion 12a of the cylindrical portion 12A and each have an end portion in the extending direction to be connected to the drive device 5.

## Description

### Technical Field

The present invention relates to a front structure of a vehicle.

### Background Art

In the related art, a rear structure of a vehicle in which a front end portion of a motor is supported on a front cross member by an attachment mount and a rear end portion of the motor is attached to a rear cross member by an attachment mount is known (see Patent Document 1).

### Citation List

### Patent Literature

Patent Document 1: JP 2019-98939 A

### Summary of Invention

### Technical Problem

Since such a known rear structure of a vehicle does not have a structure for restricting the movement of the motor at the time of vehicle collision, the motor may collide with the front cross member when the motor moves forward at the time of a vehicle collision.

When a high-voltage battery is disposed in front of the motor, the motor may collide with the high-voltage battery.

The present invention has been made in view of the above circumstances, and an object thereof is to provide a front structure of a vehicle by which a rearward movement of a drive device can be restricted with a simple structure at the time of a front collision of the vehicle.

### Solution to Problem

An embodiment of the present invention is a front structure of a vehicle including: a drive device disposed at a front part of a vehicle and configured to transmit a driving force to a drive wheel; a vehicle body member disposed at a rear of the drive device and extending in a vehicle width direction; and a mounting device configured to elastically support the drive device on the vehicle body member. The mounting device includes: a mounting portion (12) that comprises a cylindrical portion (12A) accommodating a mount bushing (11) on an inner side in a radial direction and is fixed to the vehicle body member (3); and a mounting bracket to be connected to the mount bushing and the drive device. The mounting bracket includes: a bushing-side bracket portion extending from the mount bushing toward the drive device; and a drive-side bracket portion extending from the bushing-side bracket portion to an outer side in the radial direction of an outer end portion of the cylindrical portion in the radial direction and having an end portion in an extending direction to be connected to the drive device.

### Advantageous Effects of Invention

As described above, the present invention allows the rearward movement of the drive device to be restricted with a simple structure at the time of a front collision of the vehicle.

### Brief Description of Drawings

FIG. 1 is a plan view of a front structure of a vehicle according to one example of the present invention.
FIG. 2 is a rear view of a front structure of a vehicle according to one example of the present invention.
FIG. 3 is a right side view of a front structure of a vehicle according to one example of the present invention.

### Description of Embodiments

A front structure of a vehicle according to one embodiment of the present invention includes: a drive device disposed at a front part of a vehicle and configured to transmit a driving force to a drive wheel; a vehicle body member disposed at a rear of the drive device and extending in a vehicle width direction; and a mounting device configured to elastically support the drive device on the vehicle body member. The mounting device includes: a mounting portion (12) that comprises a cylindrical portion (12A) accommodating a mount bushing (11) on an inner side in a radial direction and is fixed to the vehicle body member (3); and a mounting bracket to be connected to the mount bushing and the drive device. The mounting bracket includes: a bushing-side bracket portion extending from the mount bushing toward the drive device; and a drive-side bracket portion extending from the bushing-side bracket portion to an outer side in the radial direction of an outer end portion of the cylindrical portion in the radial direction, and having an end portion in an extending direction to be connected to the drive device.

Accordingly, the front structure of a vehicle according to one embodiment of the present invention allows the rearward movement of the drive device to be restricted with a simple structure at the time of a front collision of the vehicle.

### Examples

Hereinafter, a front structure of a vehicle according to one example of the present invention will be described with reference to the drawings.

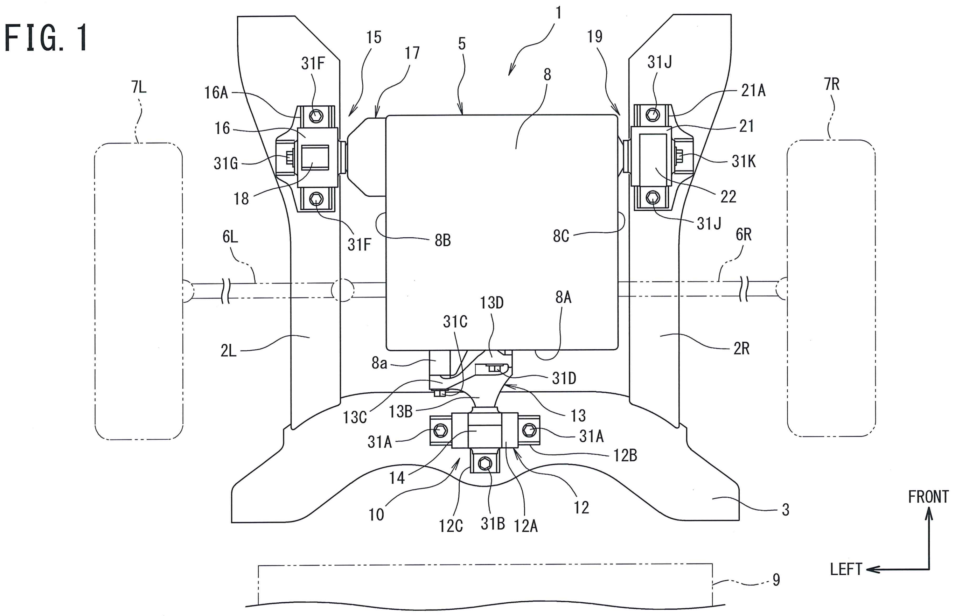

FIGS. 1 to 3 are diagrams illustrating a front structure of a vehicle according to one example of the present invention.

First, the configuration will be described.

In FIGS. 1 to 3, up, down, front, rear, left, and right directions are defined based on a drive device in a state of being disposed in a vehicle, where a front-rear direction of the vehicle is referred to as a "front-rear direction", a left-right direction of the vehicle (vehicle width direction) is referred to as a "left-right direction", and an up-down direction of the vehicle (height direction) is referred to as an "up-down direction".

As illustrated in FIG. 1, a vehicle 1 includes a left side member 2L, a right side member 2R, and a cross member 3.

The left side member 2L and the right side member 2R are disposed separated from each other in a vehicle width direction and extend in the front-rear direction. The vehicle width direction corresponds to the left-right direction.

The cross member 3 extends in the vehicle width direction, and left and right end portions thereof are connected to the left side member 2L and the right side member 2R, respectively. The cross member 3 of the present example constitutes a vehicle body member.

A drive device 5 is disposed in a space surrounded by the left side member 2L, the right side member 2R, and the cross member 3.

Specifically, the drive device 5 is disposed in a front portion of the vehicle 1 between the left side member 2L and the right side member 2R in the vehicle width direction and is disposed in front of the cross member 3 in the front-rear direction.

The drive device 5 includes a motor generator, an inverter as an electric power control device for controlling electric power supplied to the motor generator, a reduction gear for reducing the driving force (rotation speed) of the motor generator, and a differential device for transmitting the power of the reduction gear to left and right front wheels 7L and 7R via a left drive shaft 6L and a right drive shaft 6R, none of which are illustrated.

That is, the drive device 5 transmits a driving force to the left and right front wheels 7L and 7R. The front wheels 7L and 7R of the present example constitute drive wheels.

The motor generator, the inverter, the reduction gear, and the differential device are accommodated in a drive case 8.

The motor generator has a function as an electric motor that is driven by electric power supplied from a high-voltage battery 9 via the inverter and a function as a generator that generates electric power by a reverse driving force input from the differential device.

The inverter converts direct current power supplied from the high-voltage battery 9 into three-phase alternating current power and supplies the three-phase alternating current power to the motor generator or converts three-phase alternating current power generated by the motor generator into direct current power and charges the high-voltage battery 9. The high-voltage battery 9 is constituted by, for example, a secondary battery such as a lithium ion battery.

The high-voltage battery 9 is disposed at a rear of the cross member 3, and the cross member 3 is disposed between the high-voltage battery 9 and the drive device 5 in the front-rear direction. The high-voltage battery 9 and the inverter of the drive device 5 are connected by a wire harness (not illustrated).

A drive source, left and right rear drive shafts to which power of the drive source is transmitted, and left and right rear wheels, none of which are illustrated, are disposed in a rear portion of the vehicle 1.

The vehicle 1 of the present examples travels in a two-wheel drive mode in which only the drive device 5 on the front side is driven, and travels in a four-wheel drive mode in which both the drive device 5 and the drive source are driven. The drive source in the rear side is not limited to a particular source.

As the drive device 5 on the front side, an internal combustion engine and a motor may be used as the drive source, or only an internal combustion engine may be used as the drive source, instead of using the motor of the present example as the drive source.

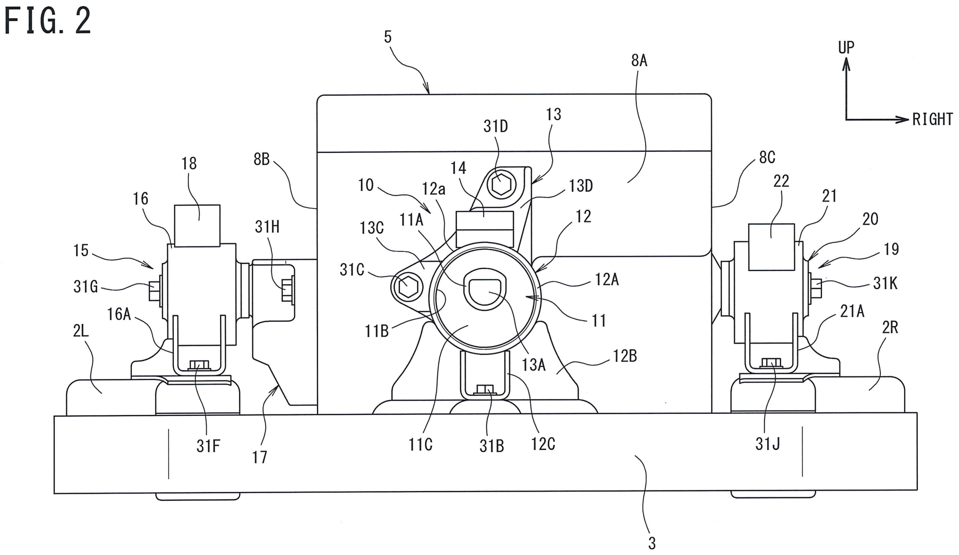

The drive device 5 is elastically supported on the cross member 3 with a rear mounting device 10. As illustrated in FIG. 2, the rear mounting device 10 includes a mount bushing 11, a mounting portion 12, a mounting bracket 13, and a mass 14. The rear mounting device 10 of the present example constitutes a mounting device.

The mount bushing 11 includes an inner tube 11A whose central axis extends in the front-rear direction, an outer tube 11B which is provided on an outer side in a radial direction of the inner tube 11A and whose central axis extends in the front-rear direction, and a mount rubber 11C which is provided between the inner tube 11A and the outer tube 11B in the radial direction to connect the inner tube 11A and the outer tube 11B and is formed in a tubular shape as a whole.

The mounting portion 12 includes a cylindrical portion 12A having a tubular shape extending in the front-rear direction, a first leg portion 12B, and a second leg portion 12C.

As illustrated in FIGS. 1 and 2, the first leg portion 12B extending in the vehicle width direction and the second leg portion 12C extending rearward from the first leg portion 12B are provided at a lower portion of the cylindrical portion 12A. The first leg portion 12B and the second leg portion 12C are fixed to a central portion of the cross member 3 in the vehicle width direction by bolts 31A and 31B. The first leg portion 12B and the second leg portion 12C of the present example constitute a leg portion.

The mount bushing 11 is press-fitted on an inner side in the radial direction of the cylindrical portion 12A, and the mount bushing 11 is accommodated in the cylindrical portion 12A. The mass 14 is fixed to an upper portion of the cylindrical portion 12A by welding or the like.

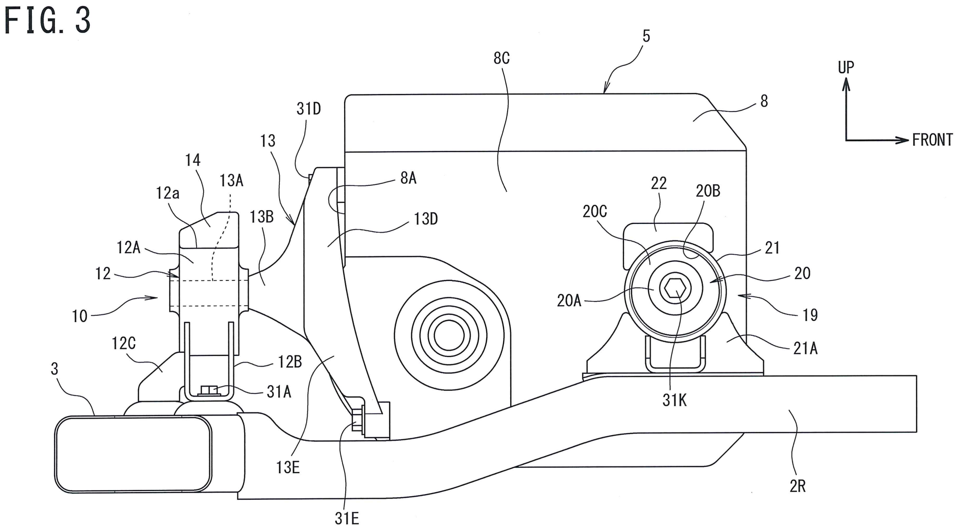

As illustrated in FIG. 2, the mounting bracket 13 includes a member-side connection portion 13A (see FIG. 3) which is connected to the mount bushing 11 by being press-fitted into the inner tube 11A, and a bushing-side bracket portion 13B extending from the member-side connection portion 13A, that is, the mount bushing 11, toward the drive device 5.

The mounting bracket 13 includes a first bracket portion 13C extending from the bushing-side bracket portion 13B to an outer side in the vehicle width direction of an outer end portion 12a of the cylindrical portion 12A in the radial direction.

An end portion of the first bracket portion 13C in the extending direction, that is, an end portion of the first bracket portion 13C in the vehicle width direction is fastened (connected) to a rear wall 8A of the drive case 8 by a bolt 31C.

Specifically, as illustrated in FIG. 1, a boss portion 8a is provided to a rear wall 8A, and the boss portion 8a protrudes rearward from the rear wall 8A. The first bracket portion 13C is fastened to the boss portion 8a by the bolt 31C on a rear side of the rear wall 8A.

As illustrated in FIGS. 2 and 3, the mounting bracket 13 includes a second bracket portion 13D extending from the bushing-side bracket portion 13B to an upper side of the outer end portion 12a of the cylindrical portion 12A.

An end portion of the second bracket portion 13D in the extending direction, that is, an upper end portion of the second bracket portion 13D is fastened (connected) to the rear wall 8A by a bolt 31D. The first bracket portion 13C and the second bracket portion 13D of the present example constitute a drive-side bracket portion.

As illustrated in FIG. 3, the mounting bracket 13 includes a third bracket portion 13E extending from the bushing-side bracket portion 13B to a lower side of the outer end portion 12a of the cylindrical portion 12A, and an end portion of the third bracket portion 13E in the extending direction, that is, a lower end portion of the third bracket portion 13E is fastened (connected) to the rear wall 8A by a bolt 31E.

As illustrated in FIGS. 1 and 2, the drive device 5 is elastically supported on the left side member 2L with a left mounting device 15.

The left mounting device 15 includes a cylindrical portion 16, a mounting bracket 17, and a mass 18.

The cylindrical portion 16 extends in a cylindrical shape in the vehicle width direction. A leg portion 16A is provided at a lower portion of the cylindrical portion 16, and the leg portion 16A is fixed to the left side member 2L by a bolt 31F. Although not illustrated, a mount bushing is press-fitted into the cylindrical portion 16, and the mount bushing is accommodated in the cylindrical portion 16. The mass 18 is fixed to an upper portion of the cylindrical portion 16 by welding or the like.

The mounting bracket 17 is fastened to the mount bushing by a bolt 31G and is fastened to a left side wall 8B of the drive case 8 by a bolt 31H and connects the mount bushing and the left side wall 8B of the drive case 8.

As illustrated in FIGS. 2 and 3, the drive device 5 is elastically supported on the right side member 2R with a right mounting device 19.

The right mounting device 19 includes a mount bushing 20, a cylindrical portion 21, and a mass 22.

The mount bushing 20 includes an inner tube 20A whose central axis extends in the vehicle width direction, an outer tube 20B which is provided on an outer side in the radial direction of the inner tube 20A and whose central axis extends in the vehicle width direction, and a mount rubber 20C which is provided between the inner tube 20A and the outer tube 20B in the radial direction to connect the inner tube 20A and the outer tube 20B and is formed in a tubular shape as a whole.

The cylindrical portion 21 extends in a cylindrical shape in the vehicle width direction. A leg portion 21A is provided at a lower portion of the cylindrical portion 21, and the leg portion 21A is fixed to the right side member 2R by a bolt 31J.

The mount bushing 20 is press-fitted into the cylindrical portion 21, and the mount bushing 20 is accommodated in the cylindrical portion 21. The mass 22 is fixed to an upper portion of the cylindrical portion 21 by welding or the like.

The mount bushing 20 is fastened to a right side wall 8C of the drive case 8 by a bolt 31K, and the cylindrical portion 21 is connected to the right side wall 8C of the drive case 8 via the mount bushing 20.

That is, the drive device 5 is elastically supported by the left side member 2L, the right side member 2R, and the cross member 3 so as to be placed on the left side member 2L, the right side member 2R, and the cross member 3 by the rear mounting device 10, the left mounting device 15, and the right mounting device 19.

Next, a front structure of the vehicle 1 of the present example will be described.

The front structure of a vehicle of the present example includes: the drive device 5 disposed at a front part of the vehicle 1 and configured to transmit a driving force to the left and right front wheels 7L and 7R; the cross member 3 disposed at a rear of the drive device 5 and extending in the vehicle width direction; and the rear mounting device 10 configured to elastically support the drive device 5 on the cross member 3.

The rear mounting device 10 includes: the mounting portion 12 to be fixed to the cross member 3 and including, on an inner side in a radial direction, the cylindrical portion 12A that accommodates the mount bushing 11; and the mounting bracket 13 to be connected to the mount bushing 11 and the drive device 5.

The mounting bracket 13 includes: the bushing-side bracket portion 13B extending from the mount bushing 11 toward the drive device 5; and the first bracket portion 13C and the second bracket portion 13D that extend from the bushing-side bracket portion 13B to an outer side in the radial direction of the outer end portion 12a of the cylindrical portion 12A and each have an end portion in the extending direction to be connected to the drive device 5.

This allows the outer end portion 12a of the cylindrical portion 12A to be opposed to the first bracket portion 13C and the second bracket portion 13D in the front-rear direction.

Meanwhile, when an impact load is applied to the drive device 5 from a front side at the time of a front collision of the vehicle 1, the drive device 5 moves rearward.

At this time, the member-side connection portion 13A moves integrally with the mount rubber 11C to a rear side of the cylindrical portion 12A, and the first bracket portion 13C and the second bracket portion 13D collide with the cylindrical portion 12A, thereby restricting the rearward movement of the mounting bracket 13.

Therefore, the rearward movement of the drive device 5 can be restricted by the cylindrical portion 12A and the mounting bracket 13.

In this way, the front structure of the vehicle 1 according to the present example allows the rearward movement of the drive device 5 to be restricted by using the rear mounting device 10, and the rearward movement of the drive device 5 can thus be restricted with a simple structure.

In the front structure of the vehicle 1 of the present example, the mounting bracket 13 includes the first bracket portion 13C extending from the bushing-side bracket portion 13B to an outer side in the vehicle width direction of the outer end portion 12a of the cylindrical portion 12A.

This allows, when the drive device 5 moves rearward at the time of a front collision of the vehicle 1, the rearward movement of the drive device 5 to be restricted by causing the first bracket portion 13C to collide with the cylindrical portion 12A.

In the front structure of the vehicle 1 of the present example, the mounting bracket 13 includes the second bracket portion 13D extending from the bushing-side bracket portion 13B to an upper side of the outer end portion 12a of the cylindrical portion 12A.

This allows, when the drive device 5 moves rearward at the time of a front collision of the vehicle 1, the rearward movement of the drive device 5 to be restricted by causing the second bracket portion 13D to collide with the cylindrical portion 12A.

Therefore, the drive device 5 can be protected from the cross member 3 by preventing the drive device 5 from colliding with the cross member 3, and the high-voltage battery 9 can be protected from the drive device 5 by preventing the drive device 5 from colliding with the high-voltage battery 9.

The wire harness connecting the high-voltage battery 9 and the drive device 5 can be prevented from being sandwiched between the drive device 5 and the cross member 3, so that the wire harness can be protected.

In the front structure of the vehicle 1 of the present example, the mounting portion 12 includes the first leg portion 12B and the second leg portion 12C provided at the lower portion of the cylindrical portion 12A.

The first leg portion 12B extends in the vehicle width direction and is fastened to the cross member 3 by the bolt 31A. The second leg portion 12C extends rearward from the first leg portion 12B and is fastened to the cross member 3 by the bolt 31B.

This allows the cylindrical portion 12A to be fastened to the cross member 3 in a wide range in the vehicle width direction and in the front-rear direction and can increase the mounting strength of the cylindrical portion 12A to the cross member 3. Therefore, when the first bracket portion 13C and the second bracket portion 13D collide with the cylindrical portion 12A, the rearward movement of the drive device 5 can be more effectively restricted.

While examples of the present invention have been disclosed, it will be apparent to those skilled in the art that modifications may be made without departing from the scope of the present invention. All such modifications and equivalents are intended to be included in the following claims.

### Reference Signs List

1 Vehicle
3 Cross member (vehicle body member)
5 Drive device
7L, 7R Front wheel (drive wheel)
10 Rear mounting device (mounting device)
11 Mount bushing
12 Mounting portion
12A Cylindrical portion
12B First leg portion (leg portion)
12C Second leg portion (leg portion)
13 Mounting bracket
13B Bushing-side bracket portion
13C First bracket portion (drive-side bracket portion)
13D Second bracket portion (drive-side bracket portion)

## Claims

1. A front structure of a vehicle, comprising:
a drive device (5) disposed at a front part of a vehicle (1) and configured to transmit a driving force to a drive wheel (7R, 7L);
a vehicle body member (3) disposed at a rear of the drive device (5) and extending in a vehicle width direction; and
a mounting device (10) configured to elastically support the drive device (5) on the vehicle body member (3), wherein
the mounting device (10) comprises
a mounting portion (12) that comprises a cylindrical portion (12A) accommodating a mount bushing (11) on an inner side in a radial direction and is fixed to the vehicle body member (3), and
a mounting bracket (13) to be connected to the mount bushing (11) and the drive device (5), and
the mounting bracket (13) comprises a bushing-side bracket portion (13B) extending from the mount bushing (11) toward the drive device (5) and a drive-side bracket portion (13C, 13D) extending from the bushing-side bracket portion (13B) to an outer side in the radial direction of an outer end portion of the cylindrical portion (12A) in the radial direction and having an end portion in an extending direction to be connected to the drive device (5).

2. The front structure of a vehicle as claimed in claim 1, wherein the drive-side bracket portion (13C, 13D) comprises a first bracket portion (13C) extending from the bushing-side bracket portion (13B) to an outer side in a vehicle width direction of the outer end portion of the cylindrical portion (12A) in the radial direction.

3. The front structure of a vehicle as claimed in claim 1 or 2, wherein the drive-side bracket portion (13C, 13D) comprises a second bracket portion (13D) extending from the bushing-side bracket portion (13B) to an upper side of the outer end portion of the cylindrical portion (12A) in the radial direction.

4. The front structure of a vehicle as claimed in claim 1 or 2, wherein
the mounting portion (12) comprises a leg portion (12B, 12C) provided at a lower portion of the cylindrical portion (12A),
the leg portion (12B, 12C) comprises a first leg portion (12B) extending in a vehicle width direction and a second leg portion (12C) extending rearward from the first leg portion (12B), and
the first leg portion (12B) and the second leg portion (12C) are fastened to the vehicle body member by (3) a bolt.

5. The front structure of a vehicle as claimed in claim 3, wherein
the mounting portion (12) comprises a leg portion (12B, 12C) provided at a lower portion of the cylindrical portion (12A),
the leg portion (12B, 12C) comprises a first leg portion (12B) extending in a vehicle width direction and a second leg portion (12C) extending rearward from the first leg portion (12B), and
the first leg portion (12B) and the second leg portion (12C) are fastened to the vehicle body member (3) by a bolt.
